Europäisches Patentamt

European Patent Office

Office européen des brevets

(11) Veröffentlichungsnummer: **0 462 325 A1**

# EUROPÄISCHE PATENTANMELDUNG

(21) Anmeldenummer: 90125832.7

(22) Anmeldetag: 31.12.90

(51) Int. Cl.5: **B23B 5/12**

(30) Priorität: 16.06.90 DE 4019284

(43) Veröffentlichungstag der Anmeldung:
27.12.91 Patentblatt 91/52

(84) Benannte Vertragsstaaten:
DE ES FR GB IT

(71) Anmelder: **Th. Kieserling & Albrecht GmbH & Co.**
**Postfach 10 07 45**
**W-5650 Solingen(DE)**

(72) Erfinder: **Glomb, Reiner, Dipl.-Ing.**
**Krankenhausstrasse 10**
**W-5620 Velbert(DE)**
Erfinder: **Maresch, Peter, Dipl.-Ing.**
**Klemens-Horn-Strasse 38**
**W-5650 Solingen(DE)**
Erfinder: **Wagner, Ralf, Dipl.-Ing.**
**Germanenstrasse 14**
**W-5650 Solingen 1(DE)**

(54) **Spanneinheit für Rundmaterial.**

(57) Die Erfindung betrifft eine Spanneinheit (32), insbesondere für spitzenlose Drehmaschinen (1) mit keilförmigen Spannelementen (19, 20) und einem Antrieb zum Verfahren der Spanneinheit auf dem Wagenbett (18). Die Spannwirkung setzt sich zusammen aus einer Vorspannung durch den Spannmotor (34) und durch einen Selbstspanneffekt, der durch den an den Spannelementen (19, 20) anliegenden runden Stab (2) und dessen Drehmoment, das er aus dem Drehvorgang mitbringt, entsteht. Die Vorspannkraft durch den Spannmotor (34) ist vorwählbar. Durch den Selbstspanneffekt ergibt sich eine drehmomentabhängige Spannkraft. Zur Erzielung des Selbstspanneffektes bei einem mit einem Drehmoment belasteten Stab (2) sind die keilförmigen Spannelemente (19, 20) so angeordnet, daß ihre Spitzen oder Schmalenden (28, 81) in entgegengesetzte Richtung weisen und die Längserstreckung der Keilform orthogonal auf der Längsachse des Stabes steht. Die Spannelemente können in radialer Richtung relativ zum zu spannenden Stab voreingestellt werden.

Fig.4

Die Erfindung bezieht sich auf eine Spanneinheit für Rundmaterial nach dem Oberbegriff von Anspruch 1. Derartige Spanneinheiten werden insbesondere bei der Dreh-, Schäl- und Schleifbearbeitung zum Spannen und Bewegen der metallischen runden Stangen im eingespannten Zustand eingesetzt, z.B. um die Stangen durch die Bearbeitungsmaschine zu transportieren.

Es sind spitzenlose Schälmaschinen bekannt, mit denen warmgewalzter Rundstahl zu Blankstahl veredelt wird. Auch andere metallische Werkstoffe können mit diesen Maschinen geschält werden. Bei der Schälbearbeitung rotiert das Rundmaterial fast nicht um seine Längsachse. Mit einem umlaufenden Messerkopf, der eine zentrale Durchgangsbohrung aufweist und der mit in diese Durchgangsbohrung hineinragenden Schälmessern auf wendelförmiger Bahn einen Span geringer Tiefe und großer Breite vom Umfang des Rundmaterials abschält, wird das Rundmaterial geschält. Mit der Ausnahme von sehr kurzen Stäben oder Rohren macht die spitzenlose Dreh- oder Schleifbearbeitung das Verfahren und die Maschine unabhänigig von der Länge der zu bearbeitenden Werkstücke. Mindestens auf einer Seite der Bearbeitungsstelle wird das Werkstück radial in einer vorbestimmten Position zentrisch zur Drehachse des Messerkopfes geführt und axial durch die Maschine transportiert. Zum Transport werden bei derartigen Maschinen meistens einlaufseitig des Messerkopfes ein oder mehrere Paare von Transportrollen eingesetzt und auslaufseitig verwendet man in der Mehrzahl der Fälle éinen Spannwagen, auf dem eine Spanneinheit angeordnet ist und der auf dem Maschinenbett der Schälmaschine um ca. ein bis zwei Meter hin und her verfahrbar ist. Der Spannwagen mit der Spanneinheit darauf dient dazu, das Rundmaterial von dem Augenblick an, in dem das hintere Ende des Rundmaterials die Einschubrollen verläßt, gegen Verdrehen durch das Schnittmoment zu sichern und aus der Schälmaschine herauszuziehen. Die Umfangskraft am Rundmaterial, die in dem Schnittmoment ihren Ursprung hat, ist deutlich größer als die erforderliche Vorschubkraft. Die Übergabe der Transportbewegung von den einlaufseitigen Transportrollen auf den auslaufseitigen Spannwagen soll ohne Einbruch bei der Vorschubgeschwindigkeit und mit konstantem Schnittmoment erfolgen. Grundsätzlich soll das zu schälende Rundmaterial konzentrisch zur Drehachse von Hohlwelle mit Messerkopf geführt werden. Kleinere Abweichungen davon kommen jedoch in der Praxis immer wieder vor.

Aus der DE-OS 2449579 ist eine Vorrichtung zum Einspannen und Ausziehen von langem Profilmaterial aus einer Werkzeugmaschine, z.B. einer Ziehmaschine bekannt, die zwei Spannelemente aufweist, die in einem gemeinsamen Spannwagen beweglich gelagert sind, die keilförmig ausgebildet sind und wobei der Keilwinkel selbstspannend ausgelegt ist. Die Keile, die auch die Spannelemente bilden, sind in einer Längsebene des auszuziehenden Stabes angeordnet. Sie werden mit Federkraft gegen das Profilmaterial angelegt und spannen, sobald das Profilmaterial die Spannbacken in die keilförmigen Taschen am Spannwagen hineinzieht.

Die Spannkeile werden durch ein weiteres, außen an die Spannkeile angelegtes Keilepaar mit einem größeren Keilwinkel auf den zu spannenden Durchmesser voreingestellt.

Diese Lösung versagt, wenn das Profilmaterial im wesentlichen nicht gezogen sondern gegen Verdrehung gesichert transportiert werden muß, weil unter diesen Umständen die gezeigte Selbstspannung nicht funktioniert.

Der Erfindung liegt die Aufgabe zugrunde, eine Spanneinheit zu schaffen, die Rundmaterial, das im wesentlichen gegen Verdrehung gesichert werden soll und zusätzlich axial transportiert wird, unter Zuhilfenahme des Selbstspanneffektes transportieren kann.

Diese Aufgabe wird durch die Merkmale von Patentanspruch 1 gelöst. Dadurch wird das Spannsystem in die Querebene des Rundmaterials geschwenkt. Durch die relative Anordnung der Spannkeile zueinander wird ausschließlich die Drehbewegung des Rundmaterials für den Spannvorgang ausgenutzt. Das hat den positiven Effekt, daß die Einfederung der Spanneinheit bei der Selbstspannung auf den Vorschubweg des Rundmaterials keinen Einfluß hat und alle Schwankungen dieser Einfederung für einen präzisen Axialtransport des Rundmaterials außer Betracht bleiben können. Die Keilform ist im weiteren Sinne zu verstehen. Die Keiloberfläche muß nicht eben sein, der Keil kann anstelle der ebenen Schräge auch spiralförmig ausgebildet sein. Das Anwachsen der Keildicke muß nicht linear erfolgen. Bei den Einsatz des erfindungsgemäßen Spannsystems bei Schälmaschinen ist ein progressives Anwachsen der Keildicke vorgesehen, wodurch die zu berücksichtigenden Span- und Spannbedingungen von im Drehschälprozess befindlichen Stäben in besonderer Weise berücksichtigt werden.

Die Präzision des Axialtransportes ist insbesondere bei den eingangs beschriebenen spitzenlosen Schälmaschinen zur Sicherstellung konstanter Schälbedingungen in der Schlußphase des Schälprozesses eines Stückes Rundmaterial von Bedeutung.

In einer speziellen Ausgestaltung der Erfindung nach Anspruch 2 ist vorgesehen, die Spannelemente für jeden Durchmesser mit einer Einrichtung vorzupositionieren, so daß nur noch ein konstanter Spannweg von den Spannelementen für den einzelnen Spannungsvorgang zurückgelegt werden muß.

In Weiterführung dieses Merkmals ist nach Anspruch 3 vorgesehen, das gefederte Anlegen der Spannelemente an das zu spannende Rundmaterial mit der Einrichtung zur Voreinstellung der Spannmittel auf einen vorwählbaren Durchmesser zu kombinieren.

Insbesondere ist eine Weiterbildung der Erfindung nach Anspruch 4 vorgesehen. Dadurch kann der Antrieb für die Voreinstellung gleichermaßen für die Anstellung der Spannbacken für den einzelnen Spannvorgang eingesetzt werden.

In Weiterführung der erfinderischen Idee ist nach Anspruch 5 vorgesehen, die Spannbacken gefedert an den gegen Drehung zu sichernden Stab anzulegen und dadurch die Voraussetzungen für die Selbstspannung zu schaffen. Die Kraft mit der die Spannelemente an den Stab angelegt werden ist dabei kleiner als 50% der erforderlichen Spannkraft. Dabei soll die vorwählbare Andrückkraft die Spannkraft ergänzen, so daß der Keilwinkel der Spannelemente größer als der Reibwinkel gewählt werden kann. Damit wird ein Festklemmen des zu spannenden Rundmaterials nach Zurücknahme der Andrückkraft sicher vermieden.

Um die bei Schälmaschinen notwendige Mittenjustierung des geschälten Rundmaterials nicht zu beeinträchtigen ist nach einem Ausgestaltungsmerkmal der Erfindung vorgesehen, alle Spannelemente synchron zu bewegen. Die Synchronisationsmittel sorgen für eine gleichzeitige Bewegung aller Spannelemente um gleiche Wege. Hierzu sind die Keilwinkel aller gleichzeitig spannenden Spannelemente gleich.

Bevorzugt ist die Verwendung von geraden Keilen zur Erzielung der Selbstspannwirkung vorgesehen, die in baulich einfacher Weise steif gelagert und dennoch leicht geführt werden können.

Alternativ ist eine Verwendung von Spannelementen vorgesehen, die Spannflächen aufweisen, die in der Form eines Windungsabschnittes einer Spirale ausgebildet sind. Diese Form entsteht, wenn man ein Keilstück um eine Welle wickelt.

Das Anwachsen der Keildicke muß dabei nicht proportional zur Länge des Keiles erfolgen. Durch eine leicht konkave Ausbildung der Keilform kann eine progressive Spannkraft für größere Durchmesser der zu spannenden Stäbe entwickelt werden. Deshalb ist vorrangig vorgesehen, die Spannelemente in der Form auszubilden, daß der Krümmungsradius der Spannflächen am dickeren Ende der "Keile" kleiner ist als an deren dünnem Ende. Eine vorrangige Verwendung der Erfindung ist bei Schälmaschinen zu sehen, die spitzenlos arbeiten und die mit leicht schräg gestellten Einschubrollen das Rundmaterial mit einer langsamen Drehung um seine Längsachse achsial durch die Schälmaschine führen und dabei auf wendelförmiger Bahn das Rundmaterial abschälen. Die Transportbewegung des Rundmaterials mit leichtem Drall durch die leicht schräg gestellten Einschubrollen ist aus der DE-PS 25 31 320 bekannt. Der Drall wird bei der Erfindung zur Spannung des Rundmaterials genutzt.

Wie an sich bekannt ist in erster Linie daran gedacht, das Rundmaterial exakt zentrisch zu der Drehmitte vo Hohlwelle und Messerkopf zu führen. Die in der Praxis üblichen Abweichungen von der theoretisch exakten Mitte sollen dabei außer Betracht bleiben.

Die Erfindung wird im einzelnen anhand der in der Zeichnung wiedergegebenen bevorzugten Anwendung auf eine Schälmaschine erläutert. Dabei zeigen :

Fig. 1 : eine Schälmaschine mit auslaufseitigem Spannwagen, teilweise im Schnitt;

Fig. 2 : eine Schälmaschine mit einer anderen Ausführungsform einer Spanneinheit, teilweise im Schnitt;

Fig. 3 : einen Teilschnitt durch Fig.2 nach Linie III-III;

Fig. 4 : einen Teilschnitt nach Linie IV-IV in Fig.1;

Fig. 5 : eine Darstellung einer Spanneinheit entsprechend Fig.4 mit einer anderen Ausführungsform der Spanneinheit;

Fig. 6 : eine Darstelung entsprechend Fig.4 für eine weitergebildete Ausführungsform;

Fig. 7 : eine Schnittdarstellung nach Linie VII-VII in Fig.6;

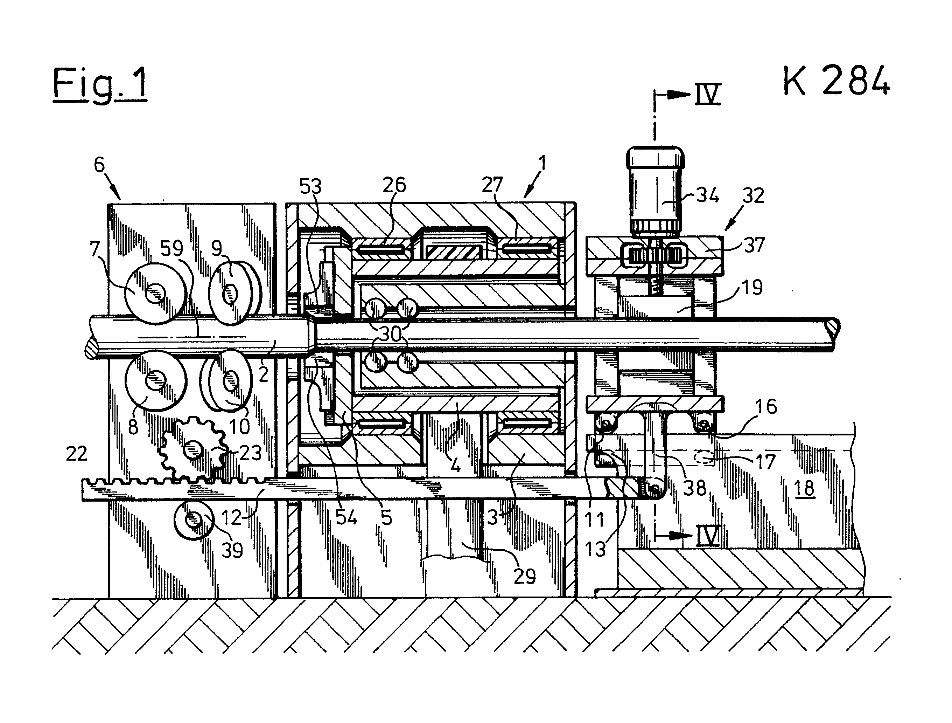

Fig.1 zeigt eine Schälmaschine 1 mit einem Einschubapparat 6 einlaufseitig vor der Schälmaschine und einer als Spannwagen ausgebildeten Spanneinheit 32, die auslaufseitig der Schälmaschine 1 auf einem Wagenbett 18 von einer Transportstange 12 hin und herbewegt wird.

Der Einschubapparat 6 besteht aus einem Gehäuse, in dem zwei Paar drehangetriebener Einschubrollen 7, 8, 9, 10 gelagert sind. Die Einschubrollen 7 - 10 spannen einen metallischen runden Stab 2 radial ein und transportieren ihn auf der Maschinenmitte 59 in axialer Richtung durch die Schälmaschine. Die Maschinenmitte 59 fällt zusammen mit der Längsachse des Rundmaterials 2. Die Einschubrollen 9, 10 bilden mit ihren Längsachsen einen Winkel von ca. 85° zur Maschinenmitte 59. Ein im Gehäuse des Einschubapparates 6 zusammen mit den Einschubrollen 7 - 10 drehangetriebenes Zahnritzel 23 verschiebt die Transportstange 12 mit dem Spannwagen 32 daran in Transportrichtung des Spannwagens 32. Eine Stützrolle 39 stellt den Eingriff von Verzahnung 22 und Zahnritzel 23 sicher.

Die Schälmaschine 1 besteht aus einem Gehäuse 3, in dem eine Hohlwelle 4 in Lagern 26, 27 drehbar aufgenommen ist, einem an der Einlaufseite der Hohlwelle angeordneten Messerkopf 5 mit daran befestigten Schälmessern 53 und 54, die auf wendelförmiger Bahn den runden Stab 2 abschälen und einer hinteren Führung mit Führungsrollen 30, auslaufseitig des Messerkopfes 5. Die Kohlwelle wird von einem Treibriemen 29 in Drehung versetzt.

Die Spanneinheit 32 hat eine ähnliche Funktion wie der Einschubapparat 6, sie muß den runden Stab 2 gegen Verdrehung um seine Längsachse sichern und aus der Schälmaschine ausziehen. Die Spanneinheit kommt nur für das hintere Längsende des runden Stabes 2 zum Einsatz, dann, wenn die Einschubrollen 7 - 10 den Stab nicht mehr fassen können.

Die Spanneinheit 32 besteht aus einem Rahmen 37, das mit Führungsrollen 11, 13, 14, 15, 16 und 17 an Führungen auf dem Wagenbett 18 verfahrbar ist. Die Spanneinheit 32 ist für den Transport auf dem Wagenbett 18 mit einem Transportarm 38 an der Transportstange 12 angelenkt. Die Spannung des runden Stabes erfolgt durch die keilförmigen Spannelemente 19, 20, die sich über parallele Rollenführungen 31, 33 am Rahmen 37 in radialer Richtung des Stabes 2 abstützen. Die Spitzen oder Schmalenden 28, 81 der keilförmigen Spannelemente weisen in entgegengesetzte Richtung. Die Längserstreckung der Keile ist orthogonal zur Längserstreckung des runden Stabes 2. Das Spannsystem ist in einer Querebene des runden Stabes 2 angeordnet. Die Bewegung der keilförmigen Spannelemente 19, 20 wird durch den Spannmotor 34 gesteuert. Die Steuermittel umfassen neben dem Spannmotor 34 ein zentrales Steuerrad 21, damit verzahnte Spindelräder 24, 25 und Gewindespindeln 36, 39, die in die als Spannbacken ausgebildeten Spannelemente 19, 20 eingreifen. Die Gewindesteigungen der Spindeln 36, 39 sind absolut gleich groß, haben jedoch unterschiedliche Vorzeichen. Damit wird erreicht, daß bei Drehung des zentralen Steuerrades 21 die Spannelemente 19, 20 um gleiche Wege in entgegengesetzte Richtungen bewegt werden. Der Zwischenraum zwischen den Spannflächen der Spannelemente 19, 20 ist von konstanter Breite und verändert sich mit der Verschiebung der Spannelemente parallel zu den Rollenführungen 31, 33. Mit dem Spannmotor 34 werden die Spannelemente 19, 20 in entgegengesetzte Richtungen so verfahren, daß sie an den zu spannenden runden Stab 2 zur Anlage gebracht werden und eine Vorspannkraft erzeugen, die unter 50% der erforderlichen Spannkraft liegt. Der Motor bringt dabei ein vorwählbares Drehmoment auf, bei dessen Erreichen die Spannbewegung automatisch beendet wird. Unter der Wirkung des Torsionsmomentes, das aus der Schnittkraft des Stabes 2 in der Schälmaschine resultiert, ergänzt sich die auf den runden Stab 2 wirkende Spannkraft in dem erforderlichen Maße, so daß sich die Gesamtspannkraft für den Stab stets in Abhängigkeit vom zu übernehmenden Torsionsmoment einstellt.

Je größer der Durchmesserbereich der zu spannenden Stäbe ist, desto länger werden die keilförmigen Spannelemente 19, 20.

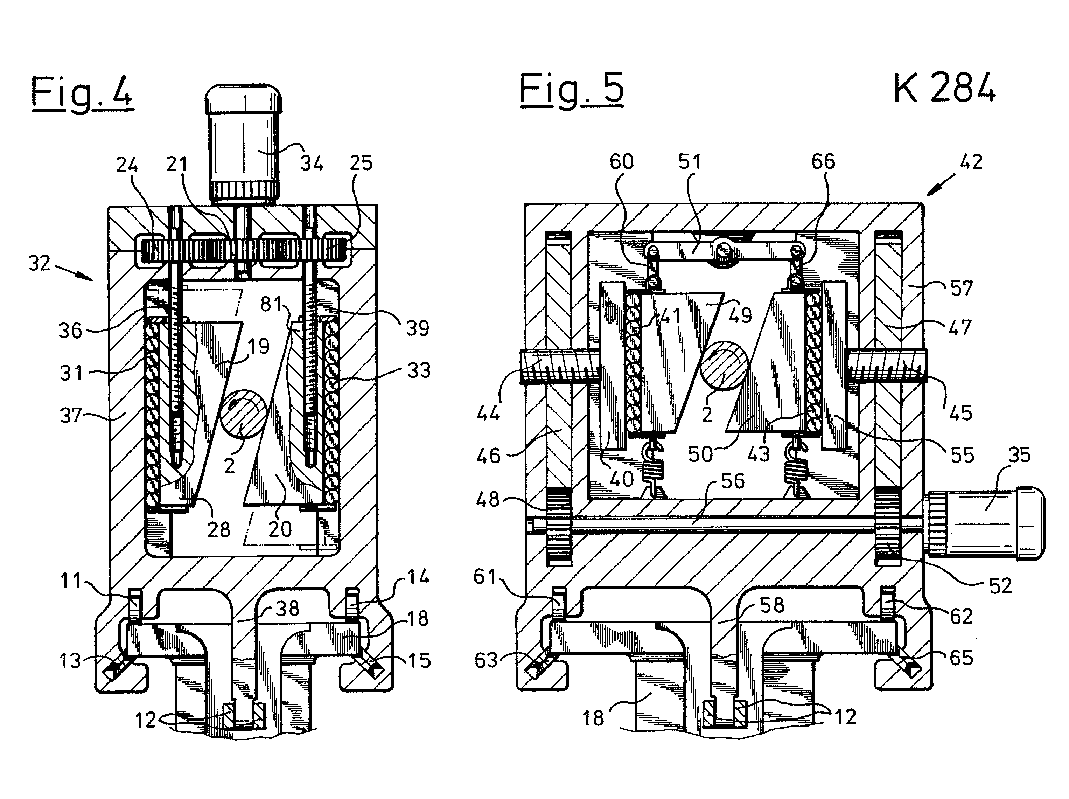

Zur Erweiterung des zu spannenden Durchmesserbereiches der runden Stäbe 2 ist die in Fig.5 dargestellte Ausführungsform bestimmt. Die dort gezeigte Spanneinheit 42 ist mit Führungsrollen 61, 62, 63 und 65 auf dem Wagenbett 18 verfahrbar. Die Hin- und Rückbewegung der Spanneinheit 42 wird durch die Transportstange 12 und den Transportarm 58 auf das Gehäuse 57 der Spanneinheit 42 übertragen.

Die keilförmigen Spannelemente 49, 50 sind so angeordnet, daß ihre Spitzen oder Schmalenden in entgegengesetzte Richtung weisen und ihre Längserstreckung orthogonal zur Längsachse des runden Stabes 2 angeordnet ist. Sie werden radial zum runden Stab 2 durch die Stellspindeln 44, 45 auf den Durchmesser des runden Stabes voreingestellt. Die Einrichtung zur Voreinstellung der Spannelemente umfaßt neben den Stellspindeln 44, 45 mit den Tragplatten 40, 55 die Stellmuttern 46, 47, die auf der Welle 56 angeordneten und mit den Stellmuttern kämmenden Zahnräder 48, 52 sowie den Spannmotor 35. Die Stellspindeln 44, 45 sind im Gehäuse 57 verschiebbar gelagert und werden von den Stellmuttern 46, 47 positioniert. Sie tragen an ihren nach innen gerichteten Enden Tragplatten 40, 55, die im Gehäuse 57 gegen Verdrehen gesichert geführt sind. Die Stellmuttern sind ortsfest aber drehbeweglich im Gehäuse 57 gelagert. Sie tragen an ihrem äußeren Umfang eine Verzahnung und werden von den Zahnrädern 48, 52 bzw. dem Spannmotor 35 gedreht. Bei Drehung der Welle 56 durch den Spannmotor 35 werden die Tragplatten 40, 55 um gleiche Wege radial zum runden Stab 2 im Sinne einer Vorspannbewegung oder zum Lösen der Spannung in entgegengesetzte Richtung verstellt.

Ergänzend zur Vorspannung durch den Spannmotor 35 kommt auch bei dieser Ausführungsform ein Selbstspanneffekt hinzu. Hierzu sind die keilförmigen Spannelemente 49, 50 mit Rollenführungen 41, 43 an den Tragplatten 40, 55 abgestützt. Die gesamte Einspannung mit Vorspann-Anteil und Selbstspann-Anteil funktioniert darüberhinaus, wie oben zu Fig.4 beschrieben. Zur Synchronisation der Bewgung der Spannelemente 49, 50 ist eine Wippe 51 am Gehäuse 57 gelagert, die mit Koppelstücken 60, 66 an den Spannelementen angelenkt ist. Die Wippe 51 erzeugt eine gegenläufige Bewegung der Spannelemente um gleichgroße Wegstrecken, was zu einer mittigen Spannung des runden Stabes 2 führt. Zur Vorpositionierung der Spannelemente 49, 50 in vertikaler Richtung sind Federelemente 73, 77 vorgesehen. Sie stellen sicher, daß ein ausreichender Weg der Spannelemente 49, 50 bei der Einfederung durch die Selbstspannung zur Verfügung steht.

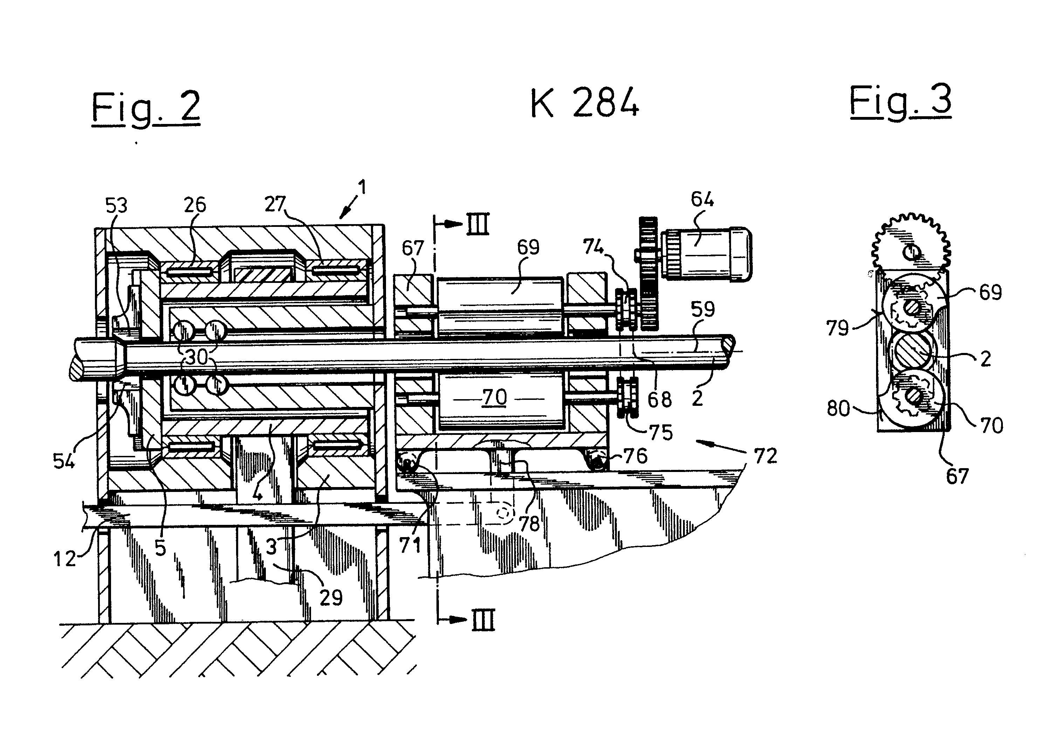

Eine weitere Ausführungsform der Erfindung ist in den Figuren 2 und 3 gezeigt. Die Schälmaschine 1 und auch der nicht gezeigte Einschubapparat sind gegenüber Fig.1 unverändert. Auslaufseitig der Schälmaschine ist die Spanneinheit 72 angeordnet, die vermittels der Transportstange 12 und dem vom Gehäuse 67 abkragenden Transportarm 78 in der oben beschriebenen Weise hin und herbewegt wird. Die Spanneinheit 72 trägt zwei um ihre Längsachse drehbare Spannrollen 69, 70, die achsparallel zum runden Stab 2 auf gegenüber liegenden Seiten desselben angeordnet sind. Die Spannrollen 69, 70 sind nicht zylindrisch sondern, wie aus der Stirnansicht nach Fig.3 ersichtlich mit spiralförmiger Kontur ausgebildet. Die Spiralen sind in entgegengesetzter Richtung gewickelt. Ihre Form ist ähnlich der eines um einen Zylinder gewickelten Keiles mit entgegengesetzter Wicklungsrichtung. Die Spannrollen 69, 70 sind starr mit Kettenrädern 74, 75 verbunden und ihre Bewegung ist mit einer beide Kettenräder umspannenden Kette 68 synchronisiert. Mit der Kette 68, die von einem Spannmotor 64 kraftabhängig gesteuert wird, werden die Spannflächen 79, 80, synchron so gedreht, bis sie an dem auf Maschinenmitte 59 positionierten Stab zur Anlage kommen und eine durch das Drehmoment des Spannmotors 64 vorbestimmte Vorspannkraft auf den runden Stab 2 ausüben. Darüberhinaus baut sich die Gesamtspannkraft mit Hilfe des Selbstspanneffektes auf, der daraus resultiert, daß der mit dem Schnittmoment belastete runde Stab 2 die Spannrollen 69, 70 im Sinne einer Verstärkung des Spanneffektes und einer Verengung des wirksamen Abstandes zwischen den Spannflächen 79, 80 dreht.

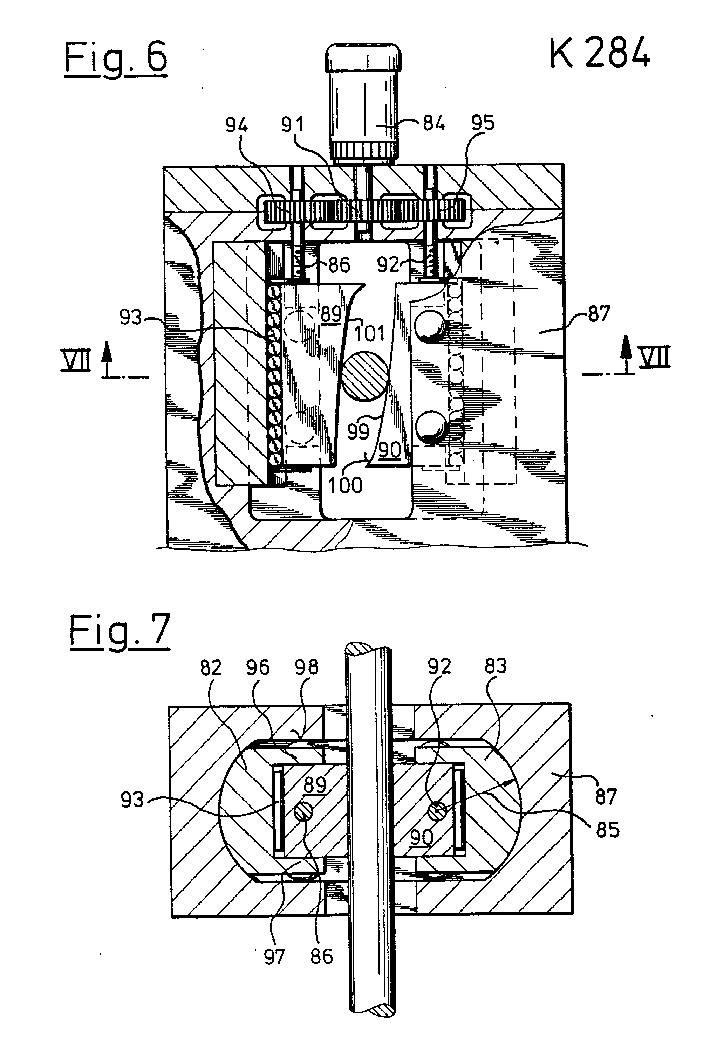

Die weitergebildete Ausführungsform der Erfindung nach Fig.6 entspricht im wesentlichen der Ausführungsform nach Fig.4. Sie umfaßt ein Gehäuse 87, in dem zwei als Spannbacken ausgebildete Spannelemente 89, 90 den runden Stab 2 einspannen. Die Spannelemente sind in Kalotten 82, 83 in einer Querebene zum Stab 2 mit Rollenführungen 93 beweglich gelagert. Die Kalotten 82, 83 stützen sich in gehöhlten Ausnehmungen im Gehäuse 87 ab. Die Kalotten 82, 83 sind U-förmig ausgebildet und sichern die Spannelemente 89, 90 mit ihren Wangen 94, 96 gegen Verschiebung in Längsrichtung des Stabes 2. An den Außenseiten der Wangen sind Fender 98 vorgesehen, die die Position der Spannelemente 89, 90 und der Kalotten 82, 83 am Gehäuse abstützen. Die Kalottenform dient der Optimierung der Anlage der Spannelemente am Stab 2. Diese Ausbildung der Abstützung der Spannelemente erlaubt auch die Spannung von konisch geschälten Stäben 2 oder Drähten.

Die Spannelemente 89, 90 werden von Stellspindeln 86, 92 in einer Querebene des Stabes 2 in entgegengesetzter Richtung für den Spann- und Lösevorgang synchron verstellt. Der Verstellmechanismus umfaßt einen Spannmotor 84, der mit einem Spannrad 91 zwei Stirnräder 94, 95 antreibt, die mit den Stellspindeln 86, 92 drehfest verbunden sind.

Die Stellspindeln 86, 92 und die Radien 85 der Kalotten 82, 83 sind so angeordnet, daß die Spindeln im Mittelpunkt des Kreises angeordnet sind, der die Kalottenform bildet.

Die Spannflächen 90, 99 sind in der Darstellung nach Fig.6 konkav ausgebildet. Diese Gestaltung der Spannflächen 90, 99 erlaubt einen progressiven Spannkraftverlauf bei größer werdendem Durchmesser des zu spannenden Stabes. Hierzu ist die Krümmung der Spannflächen 90, 99 am dickeren Ende 100 kleiner als an deren schlankerem Ende.

## Patentansprüche

1. Spanneinheit (32) für Rundmaterial (2), die die folgenden Merkmale aufweist
   a) zwei Spannelemente (19, 20), die auf gegenüberliegenden Seiten des Rundmaterials (2) anliegen,
   b) einen beide Spannelemente (19, 20) tragenden Rahmen (37)
   c) Steuermittel (34, 21, 24, 25, 36, 39) zur Einstellung der Spannelemente (19, 20)
   d) mindestens ein Spannelement (19) ist keilförmig ausgebildet,
   e) der Rahmen (37) ist auf Führungen (Wagenbett 18) mit einem Antrieb (23, 12, 38) hin und her verfahrbar,
   gekennzeichnet durch die folgenden Merkmale:
   f) mindestens ein spitzes Ende (28; 81) der Keile /des Keiles weist beim Spannen tangential vom Rundmaterial weg,
   g) die Keilform steht etwa im rechten Winkel zur Längsachse (59) des Rundmaterials (2),
   h) die Spannelemente sind in einer Querebene des zu spannenden Rundmaterials (2) gegenläufig beweglich,

2. Spanneinheit für Rundmaterial nach Anspruch 1, gekennzeichnet durch das folgende Merkmal:
   i) eine Einrichtung (35, 52, 48, 46, 47, 45, 44) zur Voreinstellung der Spannmittel (49, 50) auf einen auswählbaren Durchmesser der zu spannenden Rundmaterialien (2),

3. Spanneinheit für Rundmaterial nach einem der Ansprüche 1 oder 2, gekennzeichnet durch das folgende Merkmal:

j) die Einrichtung (35, 32, 52, 48, 47, 45, 44) zur Voreinstellung der Spannmittel (2) auf einen vorwählbaren Durchmesser ist elastisch gepuffert,

4. Spanneinheit für Rundmaterial nach Anspruch 3, gekennzeichnet durch das folgende Merkmal:

k) die elastische Pufferung der Einrichtung (35, 32, 52, 48, 47, 45, 44) zur Voreinstellung der Spannmittel (49, 50) ist an deren Antrieb (23, 12, 38) vorgesehen,

5. Spanneinheit für Rundmaterial nach Anspruch 1, gekennzeichnet durch die folgenden Merkmale:

l) die Steuermittel (34, 21, 24, 25, 36, 39) sind als elastische Kraftspeicher ausgebildet, die die Spannelemente (19, 20) mit vorwählbarer Kraft zusammendrücken,

m) die Kraft der Steuermittel (34, 21, 24, 25, 36, 39) ist kleiner als 50% der Spannkraft,

6. Spanneinheit für Rundmaterial nach Anspruch 1, gekennzeichnet durch das folgende Merkmal:

n) Synchronisationsmittel (21, 24, 25) für die Spannelemente (19, 20),

7. Spanneinheit für Rundmaterial nach Anspruch 1, gekennzeichnet durch das folgende Merkmal:

o) die Spannmelemente (19, 20) sind als gerade Keile ausgebildet,

8. Spanneinheit für Rundmaterial nach Anspruch 1, gekennzeichnet durch das folgende Merkmal:

p) die Spannelemente (69, 70) sind an ihrer Spannfläche (79, 80) als Windungsabschnitte einer Spirale ausgebildet,

9. Verwendung einer Spanneinheit nach Anspruch 1 auslaufseitig einer Schälmaschine mit einem einlaufseitigen Transportrollenpaar (9, 10) mit schräg zur Durchlaufrichtung des Rundmaterials (2) angestellten Transportrollen (9, 10) für Rundmaterial.

10. Spanneinheit für Rundmaterial nach Anspruch 1, gekennzeichnet durch die folgenden Merkmale:

q) die Spannelemente (89, 90) sind in einer Längsebene des Stabes (2) schwenkbar (Kalotten 82, 83) im Gehäuse gelagert und die Stellelemente (86, 92) für die Spannelemente sind im Mittelpunkt der Schwenkbewegung angeordnet oder

r) Die Spannelemente (19, 20) sind symmetrisch zu einer Spannmitte (59) der Spanneinheit (32) angeordnet,

Fig.1

K 284

Ⅳ

34 32
37
19
16
17
18
38

1
27
26
53

7
9
59
2
8
10
23
12
39
22

3
4
29
5
54

11 13

30

6

Fig. 2   Fig. 3

K 284

Fig.4

Fig.5                    K 284

EP 0 462 325 A1

# Fig. 6

K 284

# Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 348 719 (KIESERLING & ALBRECHT) <br> * Spalte 3, Zeile 13 - Zeile 17; Abbildung 1 * <br> — — — | 1 | B 23 B 5/12 |
| A | US-A-1 564 768 (EMRICK) <br> * Seite 1, Zeile 71 - Zeile 101; Abbildungen 3,4 * <br> — — — — — | 1 | |
| | | | **RECHERCHIERTE SACHGEBIETE (Int. Cl.5)** <br><br> B 23 B <br> B 25 B |

Der vorliegende Recherchenbericht wurde für alle Patentansprüche erstellt

| Recherchenort | Abschlußdatum der Recherche | Prüfer |
|---|---|---|
| Den Haag | 30 September 91 | BOGAERT F.L. |